# EUROPEAN PATENT APPLICATION

(11) **EP 4 592 718 A1**
(43) Date of publication of application: **30.07.2025**
(21) Application number: 24167393.8
(22) Date of filing: 28.03.2024
(51) Int. Cl.: G02B 5/00, G03B 21/14, G03B 21/00, H04N 9/31, G02B 26/08

(54) **PROJECTION DISPLAY DEVICE AND OPTICAL SHIELDING ELEMENT THEREOF**

(30) Priority: 24.01.2024 CN 202410100888
(71) Applicant: Delta Electronics, Inc., Taoyuan City 33370 (TW)
(72) Inventor: Lin, Hung-Ying, 32063 Taoyuan City (TW); Chou, Yen-I, 32063 Taoyuan City (TW)
(74) Representative: Uexküll & Stolberg

(57) **Abstract**

The present disclosure provides a projection display device (100) and an optical shielding element (3) thereof. The projection display device (100) includes a light-emitting unit (2) and a digital micromirror device (1). The light-emitting unit (2) is configured to emit an incident light to the digital micromirror device (1), and the incident light is reflected by the digital micromirror device (1) to project image. The optical shielding element (3) includes a frame (31) and a coating layer (32). The frame (31) includes a main body (311) and a hollow portion (312). The main body (311) includes a notch. The notch is disposed corresponding to the hollow portion (312) and recessed toward a direction away from the hollow portion (312). The coating layer (32) is disposed on main body (311). The roughness of the coating layer (32) is less than 500 nanometers, the reflectivity of the coating layer (32) for the incident light is less than 5%, and the transmittance of the coating layer (32) for the incident light is less than 1%.

## Description

### FIELD OF THE INVENTION

The present disclosure relates to a projection display device, and more particularly to a projection display device having an optical shielding element.

### BACKGROUND OF THE INVENTION

Currently, Digital Light Processing (DLP) imaging technology is widely employed in projection display devices. Generally, in the projection display devices utilizing digital light processing, the images are generated by the light reflected from Digital Micromirror Devices (DMD).

The traditional digital micromirror device includes a substrate and a plurality of miniature reflective mirrors. The plurality of miniature reflective mirrors are arranged in an array on the substrate, and configured to form a first area of the digital micromirror device. Each of reflective mirrors controls one pixel in the projected image. A second region of the digital micromirror device is formed on the substrate where the reflective mirrors are not disposed. When an incident light is emitted to the digital micromirror device, the miniature reflective mirrors in the first area reflect the light, and project an image. Meanwhile, the incident light is also emitted to the second area of the digital micromirror device. Consequently, the incident light is reflected by the second area to generate scattered lights. The scattered lights result in interference and poor image quality in the projected display.

Therefore, there is a need of providing a projection display device and an optical shielding element thereof to obviate the drawbacks encountered from the prior arts.

### SUMMARY OF THE INVENTION

It is an objective of the present disclosure to provide a projection display device and an optical shielding element thereof, which achieves the advantages of reducing the generation of stray light, and improving the quality of projection image.

In accordance with an aspect of the present disclosure, there is provided an optical shielding element for a projection display device. The projection display device includes a light-emitting unit and a digital micromirror device. The light-emitting unit is configured to emit an incident light to the digital micromirror device, and the incident light is reflected by the digital micromirror device to project image. The optical shielding element includes a frame and a coating layer. The frame includes a main body and a hollow portion. The main body surrounds the hollow portion. The main body includes a first surface, a second surface, an inner surface, and a notch. The first surface and the second surface are two opposite surfaces of the main body. The inner surface is in connection with the first surface and disposed corresponding to the hollow portion. The second surface of the main body is attached to the digital micromirror device. The notch is recessed from the inner surface toward a direction away from the hollow portion. The coating layer is disposed on the first surface of the main body. The roughness of the coating layer is less than 500 nanometers, the reflectivity of the coating layer for the incident light is less than 5%, and the transmittance of the coating layer for the incident light is less than 1%.

In accordance with another aspect of the present disclosure, there is provided a projection display device. The projection display device includes a digital micromirror device, a light-emitting unit and an optical shielding element. The digital micromirror device includes a substrate and a plurality of micro reflectors. The plurality of micro reflectors are disposed in an array on the substrate to form a first area. A second area is formed on the substrate where the plurality of micro reflectors are not disposed. The light-emitting unit is configured to emit an incident light to the digital micromirror device, and the incident light is reflected by the plurality of micro reflectors in the first area of the digital micromirror device to project image. The optical shielding element is disposed on the digital micromirror device, and includes a frame and a coating layer. The frame includes a main body and a hollow portion. The main body surrounds the hollow portion. The main body includes a first surface, a second surface, an inner surface, and a notch. The first surface and the second surface are two opposite surfaces of the main body. The inner surface is in connection with the first surface and disposed corresponding to the hollow portion. The second surface of the main body is attached to the digital micromirror device. The notch is recessed from the inner surface toward a direction away from the hollow portion. The coating layer is disposed on the first surface of the main body. The roughness of the coating layer is less than 500 nanometers, the reflectivity of the coating layer for the incident light is less than 5%, and the transmittance of the coating layer for the incident light is less than 1%.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic perspective view illustrating a projection display device according to an embodiment of the present disclosure;
FIG. 2 is a partially enlarged cross-sectional view illustrating a digital micromirror device and an optical shielding element of the projection display device of FIG. 1;
FIG. 3 is a schematic perspective view illustrating the optical shielding element of the projection display device of FIG. 1;
FIG. 4 is a schematic perspective view in another angle illustrating the optical shielding element of the projection display device of FIG. 1;
FIG. 5 is a partially enlarged cross-sectional view illustrating the optical shielding element at section C-C of FIG. 4, wherein the section C-C is perpendicular to a first surface and an inner surface of the main body, respectively;
FIG. 6 is a partially enlarged cross-sectional view illustrating the optical shielding element of a variant embodiment of the present disclosure; and
FIG. 7 is a partially enlarged cross-sectional view illustrating the optical shielding element of another variant embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

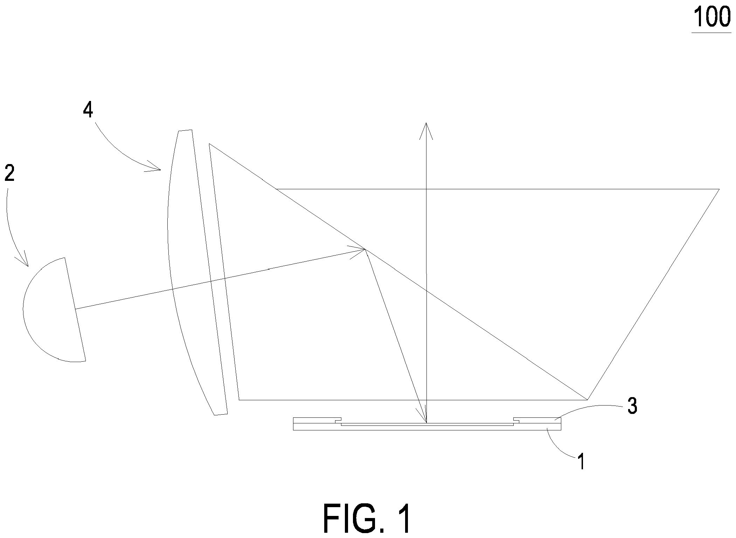

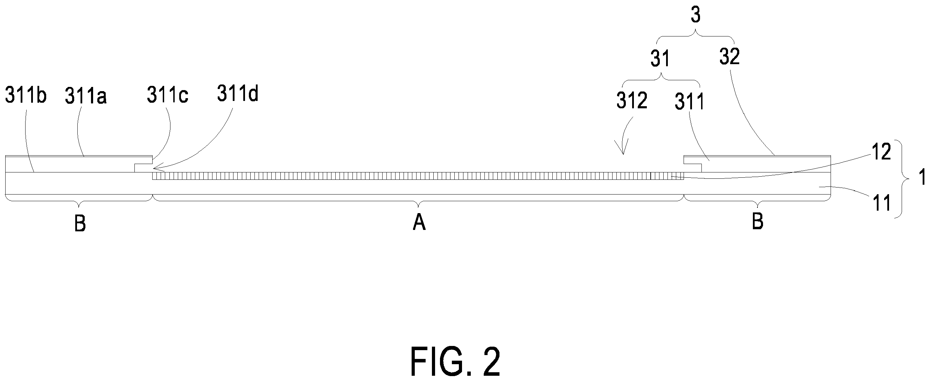

FIG. 1 is a schematic perspective view illustrating a projection display device according to an embodiment of the present disclosure, and FIG. 2 is a partially enlarged cross-sectional view illustrating a digital micromirror device and an optical shielding element of the projection display device of FIG. 1. As shown in FIG. 1 and FIG. 2, the projection display device 100 of the present embodiment includes a digital micromirror device 1, a light-emitting unit 2 and an optical shielding element 3. The digital micromirror device 1 includes a substrate 11 and a plurality of micro reflectors 12. The plurality of micro reflectors 12 are disposed in an array on the substrate 11 to form a first area A of the digital micromirror device 1. A second area B of the digital micromirror device 1 is formed on the substrate 11 where the plurality of micro reflectors 12 are not disposed. The light-emitting unit 2 is configured to emit an incident light to the digital micromirror device 1, and the incident light is reflected by the plurality of micro reflectors 12 in the first area A of the digital micromirror device 1, and passes through lenses (not shown) to project image on a screen (not shown). In the present embodiment, the projection display device 100 includes a lens assembly 4. The lens assembly 4 is configured to concentrate and project the incident light to the digital micromirror device 1.

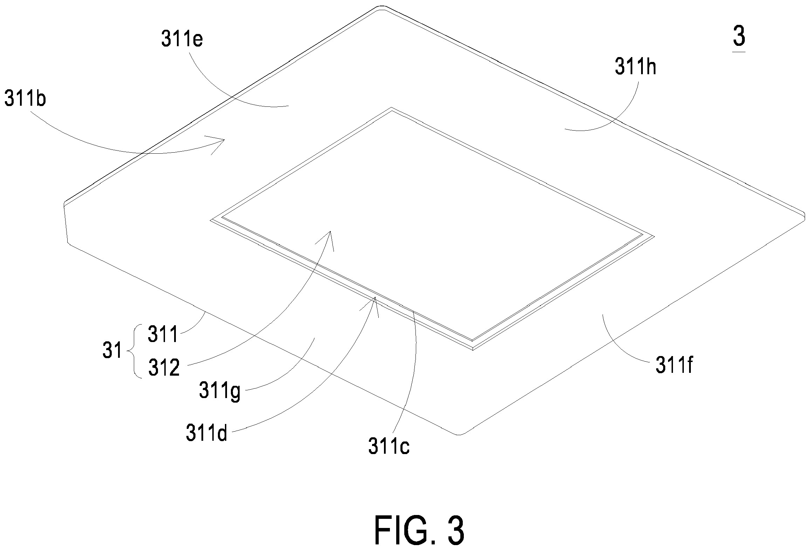

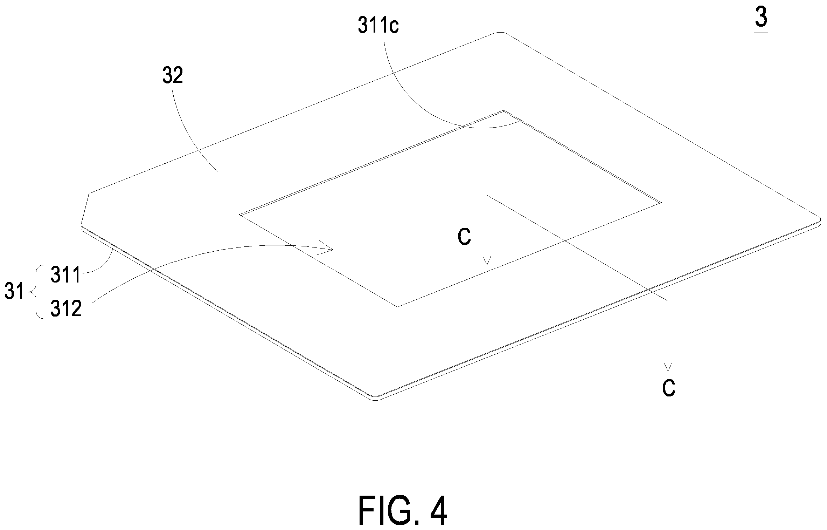

FIG. 3 is a schematic perspective view illustrating the optical shielding element of the projection display device of FIG. 1, and FIG. 4 is a schematic perspective view in another angle illustrating the optical shielding element of the projection display device of FIG. 1. As shown in FIG.1 to FIG. 4, the optical shielding element 3 of the present embodiment is disposed on the digital micromirror device 1, and includes a frame 31 and a coating layer 32. The frame 31 includes a main body 311 and a hollow portion 312. The main body 311 surrounds the hollow portion 312. The main body 311 includes a first surface 31 1a, a second surface311b, an inner surface 311c, and a notch 311d. The first surface 311a and the second surface 311b are two opposite surfaces of the main body 311. The inner surface 311c is in connection with the first surface 311a, and disposed corresponding to the hollow portion 312. The second surface 311b of the main body 311 is attached to the digital micromirror device 1 and disposed corresponding to the second area B. The hollow portion 312 of the frame 31 is disposed corresponding to the first area A. The notch 311d is recessed from the inner surface 311c toward a direction away from the hollow portion 312. Due to the arrangement of the notch 311d, the area of the inner surface 311c is reduced. Consequently, the scattered lights generated by the incident light being reflected by the inner surface 311c of the main body 311 are reduced, and the quality of projection image is improved.

As shown in FIG.1 to FIG. 4, the coating layer 32 of the present embodiment is disposed on the first surface 311a of the main body 311 of the frame 31. In the present embodiment, the roughness of the coating layer 32 is less than 500 nanometers (nm). Preferably but not exclusively, the roughness of the coating layer 32 is between 1 nanometer and 500 nanometers. Since the roughness of the coating layer 32 is less than 500 nanometers, the coating layer 32 is formed as a surface similar to a mirror. Under this circumstance, the lights reflected by the coating layer 32 are evenly projected in the same direction. Consequently, the scattered lights are reduced, and the quality of projection image is improved. In addition, the coating layer 32 is a thin film structure with extremely small thickness. Consequently, the scattered lights reflected by the thickness of the coating layer 32 are reduced and the quality of projection image is improved. By comparing with other surface treatment methods, such as matt spray painting, the coating layer 32 of the present embodiment has relatively low roughness and relatively low thickness, and forms a surface similar to the mirror, which has a better suppression effect on scattered lights, and the quality of projection image is better. For ease of understanding, the coating layer 32 shown in FIG. 2 and FIG. 4 is represented by a visible thickness. However, it is noted that the coating layer 32 of the present disclosure is not limited to have a thickness visible to the naked eyes. Actually, in the present embodiment, the thickness of the coating layer 32 is extremely small and difficult to be directly seen by the naked eyes.

In the present embodiment, the reflectivity of the coating layer 32 for the incident light is less than 5%. Preferably but not exclusively, the reflectivity of the coating layer 32 for the incident light is between 0.1% and 5%. Since the reflectivity of the coating layer 32 for the incident light is less than 5%, most of the incident light irradiating on the coating layer 32 is absorbed by the coating layer 32. Consequently, the scattered lights are reduced, and the quality of projection image is improved. In an embodiment, preferably but not exclusively, the coating layer 32 of the optical shielding element 3 is a black coating layer for reducing the reflectivity.

In the present embodiment, the transmittance of the coating layer 32 for the incident light is less than 1%. Preferably but not exclusively, the transmittance of the coating layer 32 for the incident light is between 0.01% and 1%. Since the transmittance of the coating layer 32 for the incident light is less than 1%, the incident light penetrating through the coating layer 32 to the second area B of the substrate 11 is reduced. Consequently, the scattered lights reflected by the second area B of the substrate 11 are reduced, and the quality of projection image is improved.

As shown in FIG. 3 and FIG. 4, in the present embodiment, preferably but not exclusively, the frame 31 of the optical shielding element 3 is a rectangular frame. The main body 311 of the frame 31 includes a first lateral plate 311e, a second lateral plate 311f, a third lateral plate 311g and a fourth lateral plate 311h. The first lateral plate 311e and the second lateral plate 311f are disposed opposite to each other, and the third lateral plate 311g and the fourth lateral plate 311h are disposed opposite to each other. Two ends of the third lateral plate 311g are in connection to the first lateral plate 311e and the second lateral plate 311f, respectively. Two ends of the fourth lateral plate 311h are in connection to the first lateral plate 311e and the second lateral plate 311f, respectively. The first lateral plate 311e, the second lateral plate 311f, the third lateral plate 311g and the fourth lateral plate 311h surround the hollow portion 312. Since the frame 31 of the present embodiment is a rectangular frame, the structure is simple and easy to be manufactured, and the structural strength is high.

In an embodiment, an area of the hollow portion 312 of the optical shielding element 3 is greater than an area of the first area A of the digital micromirror device 1, so as to prevent the plurality of micro reflectors 12 in the first area A from being covered by the optical shielding element 3. In an embodiment, the area of the hollow portion 312 of the optical shielding element 3 is equal to the area of the first area A of the digital micromirror device 1. In other words, the hollow portion 312 of the optical shielding element 3 and the first area A of the digital micromirror device 1 are aligned with other, and have matched contours. Consequently, the gap between the optical shielding element 3 and the first area A of the digital micromirror device 1 is reduced, and the quality of projection image is improved. In an embodiment, preferably but not exclusively, the area of the frame 31 of the optical shielding element 3 is equal to an area of the second area B of the digital micromirror device 1.

In an embodiment, the main body 311 of the frame 31 of the optical shielding element 3 is an opaque plate made of a metal material. Preferably but not exclusively, the metal material is aluminum, aluminum alloy or other metal alloy. In some other embodiments, the main body 311 of the frame 31 is made of a glass material.

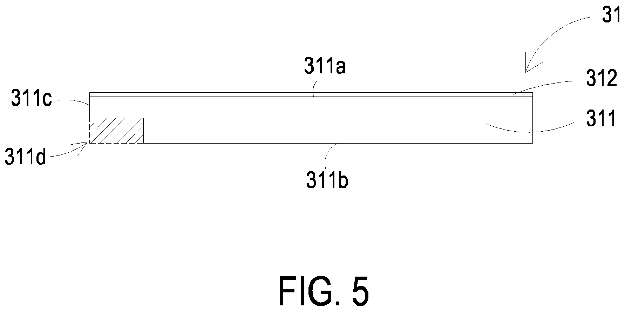

FIG. 5 is a partially enlarged cross-sectional view illustrating the optical shielding element at section C-C of FIG. 4, wherein the section C-C is perpendicular to the first surface 311a and the inner surface 311c of the main body 311, respectively. As shown in FIG. 3 to FIG. 5, preferably but not exclusively, the notch 311d of the main body 311 of the frame 31 is a rectangular cross-section notch (represented by filled rectangle with slash lines in the dotted lines), which is easy to be manufactured, and has lower cost.

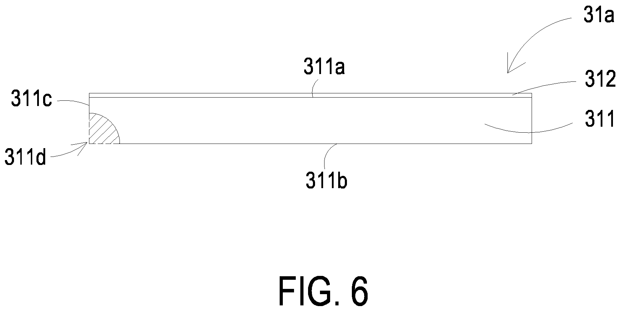

FIG. 6 is a partially enlarged cross-sectional view illustrating the optical shielding element of a variant embodiment of the present disclosure. The structure of the frame 31a of FIG. 6 is similar to the frame 31 of FIG. 5, and the same references represent same component and function, and would not be repeatedly described hereto. Different from the frame 31 of FIG. 5, the notch 311d of the main body 311 of the frame 31a of the present variant embodiment is a sectoral cross-section notch (represented by filled sector with slash lines in the dotted lines). Since the portion of the main body 311 corresponding to the notch 311d is a continuous curved surface, lights are prevented from being reflected several times by several surfaces. Consequently, the scattered lights are reduced.

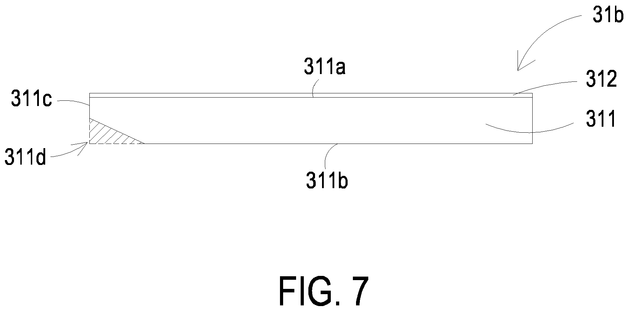

FIG. 7 is a partially enlarged cross-sectional view illustrating the optical shielding element of another variant embodiment of the present disclosure. The structure of the frame 31b of FIG. 7 is similar to the frame 31 of FIG. 5, and the same references represent same component and function, and would not be repeatedly described hereto. Different from the frame 31 of FIG. 5, the notch 311d of the main body 311 of the frame 31b of the present variant embodiment is a triangular cross-section notch (represented by filled triangle with slash lines in the dotted lines). Since the portion of the main body 311 corresponding to the notch 311d is a continuous flat surface, the lights are prevented from being reflected several times by several surfaces. Consequently, the scattered lights are reduced. In addition, the triangular cross-section notch is easy to be manufactured, and has lower cost. In some embodiments, the notch 311d of the main body 311 is a polygonal cross-section notch or an irregular cross-section notch, but not limited thereto.

From above descriptions, the present disclosure provides a projection display device and an optical shielding element thereof. The optical shielding element includes a frame and a coating layer. The notch of the main body of the frame is recessed from the inner surface toward a direction away from the hollow portion, so that the area of the inner surface is reduced, the scattered lights generated by the incident light being reflected from the inner surface of the main body are reduced, and the quality of projection image is improved. In addition, since the roughness of the coating layer is less than 500 nanometers, the coating layer is formed as a surface similar to a mirror, and the reflected lights from the coating layer are evenly projected in the same direction. Consequently, the scattered lights are reduced, and the quality of projection image is improved. Moreover, since the reflectivity of the coating layer for the incident light is less than 5%, most of the incident light irradiating on the coating layer is absorbed by the coating layer. Consequently, the scattered lights are reduced, and the quality of projection image is improved. Furthermore, since the transmittance of the coating layer for the incident light is less than 1%, the incident light penetrating through the coating layer to the second area of the substrate is reduced. Consequently, the scattered lights reflected by the second area of the substrate are reduced, and the quality of projection image is improved.

## Claims

1. An optical shielding element (3) for a projection display device (100), wherein the projection display device (100) comprises a light-emitting unit (2) and a digital micromirror device (1), the light-emitting unit (2) is configured to emit an incident light to the digital micromirror device (1), and the incident light is reflected by the digital micromirror device (1) to project image, wherein the optical shielding element (3) is **characterized by** comprising:
a frame (31) comprising a main body (311) and a hollow portion, the main body (311) surrounding the hollow portion (312) and comprising a first surface (311a), a second surface (311b), an inner surface (311c), and a notch (311d), the first surface (311a) and the second surface (311b) being two opposite surfaces of the main body (311), and the inner surface (311c) being in connection with the first surface (311a) and disposed corresponding to the hollow portion (312), the second surface (311b) of the main body (311) being attached to the digital micromirror device (1), and the notch (311d) being recessed from the inner surface (311c) toward a direction away from the hollow portion (312); and
a coating layer (32) disposed on the first surface (311a) of the main body (311), wherein the roughness of the coating layer (32) is less than 500 nanometers, the reflectivity of the coating layer (32) for the incident light is less than 5%, and the transmittance of the coating layer (32) for the incident light is less than 1%.

2. The optical shielding element (3) according to claim 1, wherein the coating layer (32) is a black coating layer.

3. The optical shielding element (3) according to claim 1 or 2, wherein the main body (311) of the frame (31) is an opaque plate made of a metal material.

4. The optical shielding element (3) according to claim 3, wherein the metal material is aluminum or aluminum alloy.

5. The optical shielding element (3) according to any one of claims 1 to 4, wherein the notch (311d) is a sectoral cross-section notch, a triangular cross-section notch, a rectangular cross-section notch, a polygonal cross-section notch or an irregular cross-section notch.

6. The optical shielding element (3) according to any one of claims 1 to 5, wherein the frame (31) is a rectangular frame (31), and the main body (311) of the frame (31) comprises a first lateral plate (311e), a second lateral plate (311f), a third lateral plate (311g) and a fourth lateral plate (311h), wherein the first lateral plate (311e) and the second lateral plate (311f) are disposed opposite to each other, the third lateral plate (311g) and the fourth lateral plate (311h) are disposed opposite to each other, wherein two ends of the third lateral plate (311g) are in connection to the first lateral plate (311e) and the second lateral plate (311f), respectively, wherein two ends of the fourth lateral plate (311h) are in connection to the first lateral plate (311e) and the second lateral plate (311f), respectively, wherein the first lateral plate (311e), the second lateral plate (311f), the third lateral plate (311g) and the fourth lateral plate (311h) surround the hollow portion (312).

7. A projection display device (100) **characterized by** comprising:
a digital micromirror device (1) comprising a substrate (11) and a plurality of micro reflectors (12), the plurality of micro reflectors (12) being disposed in an array on the substrate (11) to form a first area (A), and a second area (B) being formed on the substrate (11) where the plurality of micro reflectors (12) are not disposed;
a light-emitting unit (2) configured to emit an incident light to the digital micromirror device (1), and the incident light being reflected by the plurality of micro reflectors (12) in the first area (A) of the digital micromirror device (1) to project image; and
an optical shielding element (3) disposed on the digital micromirror device (1), and comprising a frame (31) and a coating layer (32), the frame (31) comprising a main body (311) and a hollow portion (312), the main body (311) surrounding the hollow portion (312), and comprising a first surface (311a), a second surface (311b), an inner surface (311c), and a notch (311d), the first surface (311a) and the second surface (311b) being two opposite surfaces of the main body (311), and the inner surface (311c) being in connection with the first surface (311a) and disposed corresponding to the hollow portion (312), the second surface (311b) of the main body (311) being attached to the digital micromirror device (1), the notch (311d) being recessed from the inner surface (311c) toward a direction away from the hollow portion (312), and the coating layer (32) being disposed on the first surface (311a) of the main body (311), wherein the roughness of the coating layer (32) is less than 500 nanometers, the reflectivity of the coating layer (32) for the incident light is less than 5%, and the transmittance of the coating layer (32) for the incident light is less than 1%.

8. The projection display device (100) according to claim 7, wherein the coating layer (32) is a black coating layer.

9. The projection display device (100) according to claim 7 or 8, wherein the main body (311) is disposed corresponding to the second area (B) of the digital micromirror device (1), and the hollow portion (312) is disposed corresponding to the first area (A) of the digital micromirror device (1), wherein an area of the hollow portion (312) of the optical shielding element (3) is greater than or equal to an area of the first area (A) of the digital micromirror device (1).

10. The projection display device (100) according to any one of claims 7 to 9, wherein the main body (311) of the frame (31) is an opaque plate made of a metal material.

11. The projection display device (100) according to claim 10, wherein the metal material is aluminum or aluminum alloy.

12. The projection display device (100) according to any one of claims 7 to 11, wherein the notch (311d) is a sectoral cross-section notch, a triangular cross-section notch, a rectangular cross-section notch, a polygonal cross-section notch or an irregular cross-section notch.
